# EUROPEAN PATENT SPECIFICATION

(11) **EP 0 212 339 B1**
(45) Date of publication and mention of the grant of the patent: **16.08.1995**
(21) Application number: 86110290.3
(22) Date of filing: 21.04.1983
(51) Int. Cl.: B29D 22/00, B29C 49/06, B65D 1/02, B29C 49/22

(54) **Bottle-shaped container**
Flaschenförmiger Behälter
Récipient en forme de bouteille

(30) Priority: 22.04.1982 JP 67780/82
(43) Date of publication of application: 04.03.1987
(62) Divisional of application: 83302271.8
(73) Proprietor: Yoshino Kogyosho CO., LTD., Tokyo 136 (JP)
(72) Inventor: Kushida, Hideo, Yachiyo-Shi Chiba-Ken (JP); Takahashi, Sumio, Sakura-Shi Chiba-Ken (JP); Koshio, Syuichi, Koto-Ku Tokyo (JP)
(74) Representative: Heath, Derek James

(56) References cited:
- DE-A- 1 545 013
- DE-A- 2 537 491
- FR-A- 2 335 407
- GB-A- 686 291
- GB-A- 1 169 469
- PATENT ABSTRACTS OF JAPAN, vol. 4, no. 76 (M-14)[558], 3rd June 1980; & JP-A-55 37 335 (NITSUSEI JIYUSHI KOGYO K.K.) 15-03-1980
- PATENT ABSTRACTS OF JAPAN, vol. 5, no. 6 (M-50)[678], 16th January 1981; & JP-A-55 139 228 (TOPPAN INSATSU K.K.) 30-10-1980
- PATENT ABSTRACTS OF JAPAN, vol. 7, no. 68 (M-201)[1213], 19th March 1983; & JP-A-57 210 830 (YOSHINO KOGYOSHO K.K.) 24-12-1982

## Description

This invention relates to a hollow blow-moulded bottle-shaped container of a biaxially oriented polyethylene terephthalate resin.

A polyethylene terephthalate resin, hereinafter referred to as "PET", has a variety of excellent properties and characteristics. In order to effectively perform the excellent properties and characteristics of the PET, a bottle-shaped container of the PET is substantially biaxially oriented without exception.

Although the conventional hollow blow-molded bottle-shaped container of the biaxially oriented PET effectively performs a variety of properties and characteristics as described above, the container does not always sufficiently exhibit a gas barrier property.

In order to supplement the insufficient gas barrier property of the bottle-shaped container of the PET, it has heretofore been considered necessary to provide a hollow blow-moulded bottle-shaped container of a biaxially oriented PET having a multilayer structure layer including, in combination, a layer formed of a synthetic resin material having an excellent gas barrier property and a layer formed of the PET. However, the adhering strength between the layer formed of a material having an excellent gas barrier property and the layer formed of the PET is weak or insufficient because of the difference of cooling shrinkage factors at the moulding time between the layer formed of the material having an excellent gas barrier property and the layer formed of the PET and of insufficient compatibility, bonding strength and reaction strength between the material having an excellent gas barrier property and the PET. Thus, the mechanical strength of the bottle-shaped container is not only insufficient, but also gas can escape from the contents of the container which means, for example, that a carbon dioxide gas is able to accumulate between the layer formed of the material having an excellent gas barrier property and the intermediate layer formed of the PET.

In other words, when a preformed injection moulded piece or parison is covered with a surface layer in which both inner and outer surfaces of an intermediate layer formed of a material having a high gas barrier property have been covered with the PET, the surface layer and the intermediate layer are generally bonded relatively strongly in the state of the preformed injection moulded state. However, when the preformed parison or piece is further blow-moulded to biaxially orient the preformed piece into a bottle-shaped container, the bonding strength between the surface layer and the intermediate layer becomes extremely weak due to the difference of the degrees of orientations beweeen the surface layer and the intermediate layer of the bottle-shaped container.

Accordingly, the carbon dioxide gas which has penetrated into the inner surface layer is readily accumulated between the inner surface layer and the intermediate layer as described above. In this manner an exfoliation between the inner surface layer and the intermediate layer not only occurs over the entire bottle-shaped container, but also the body of the container tends to swell due to the internal pressure on the container, resulting in a remarkable deterioration in the external appearance of the bottle-shaped container as merchandise.

A resin material which has an excellent gas barrier property generally has a drawback in that the material is whitened in contact with water contents. When a gap is formed between the inner surface layer and the intermediate layer of the bottle-shaped container as described above, the intermediate layer is whitened due to the water contents which penetrate even in a very small amount into the gap formed between the inner surface layer and the intermediate layer, thereby causing a difficulty in the loss of transparency of the bottle-shaped container.

It is known from DE-A-1 545 013 to produce blow-moulded articles using a mix of PET and xylylene-containing polyamide resin. However, this citation does not relate to bottle-shaped containers, nor does it deal with the leakage problem described above, nor does it disclose the precise mix of material with which the present invention is concerned.

It is also known from Patent Abstracts of Japan, Volume 7, No. 68 (M-201) [1213], 19th March 1985, referring to JP-A-57 210 830 published on 24th December 1982 to use a mixture of PET and xylidine group-containing polyamide in the range of 5-30% to produce blow-moulded bottles. However, these bottles are all multi-layer bottles so that they suffer from the disadvantages mentioned above in connection with multi-layer articles.

The present invention aims to overcome the disadvantages outlined above. It does so by means of the characterising feature of the single claim, with the preamble of the claim being based on the Japanese publication cited above.

A hollow blow-moulded bottle-shaped container having an excellent gas barrier property of a biaxially oriented mixture resin material without a multilayer structure will now be described as a preferred embodiment of the present invention.

This bottle-shaped container is blow-moulded by a biaxial orientation with a mixture resin material which includes a PET and a xylene group-containing polyamide resin. The mixture resin material contains 5 to 30% by weight of xylene group-containing polyamide resin to the PET.

The gas barrier property of the bottle-shaped container thus produced is obtained by the operation of the xylene group-containing polyamide resin mixed at the ratio of 5 to 30% by weight to the PET. The higher the mixture ratio of the xylene group-containing polyamide resin to the PET is in this range, the higher the gas barrier property of the bottle-shaped container becomes.

This xylene group-containing polyamide resin is one of the synthetic resin materials having the highest gas barrier property, has an excellent physical property in maintaining resistance against the contents contained in the bottle-shaped container, and has another physical property similar to that of the PET at the moulding temperature.

If the mixture ratio of the xylene group-containing polyamide resin is, however, excessively high such as greater than 30% by weight to the PET, the wall structure of the bottle-shaped container becomes a laminated foil structure, thereby causing a trend of occurring an exfoliation between the foil layers of the bottle-shaped container. Thus, the mechanical strength such as the wear resistance and the internal pressure resistance against the contents contained in the container abruptly deteriorate, and the mouldability of the bottle-shaped container is substantially aggravated.

Therefore, when a bottle-shaped container in which a liquid is hermetically contained and not so required for a high gas barrier property is blow-moulded, it is preferred to mould the bottle-shaped container with a mixture resin material which is mixed with approx. 5 to 10% by weight of the xylene group-containing polyamide resin to the PET. On the other hand, when a bottle-shaped container in which the liquid contained in the container requires a high gas barrier property is blow-moulded, it is preferred to mould the bottle-shaped container with a mixture resin material which is mixed with the xylene group-containing polyamide resin of as high as possible within 30% by weight to the PET in the degree for not deteriorating the mechanical strength of the wall of the bottle-shaped container to be blow-moulded.

An example of the measured values relative to the gas barrier property of the bottle-shaped container will be listed below.

When a bottle-shaped container having 0.45mm of wall thickness of the body is moulded only with 37g of the PET, the penetrated quantity of oxygen through the bottle-shaped container was 0.0180 cc per day. When a bottle-shaped container thus moulded with a mixture resin material which was mixed with 20% by weight of xylene group-containing polyamide resin to the PET, the penetrated quantity of oxygen through the bottle-shaped container was 0.0001 cc per day. It was clear that the bottle-shaped container moulded only with the mixture resin material which was thus mixed with the xylene group-containing polyamide resin exhibited a very high gas barrier property.

When the penetrated quantities of carbon dioxide gas of both the bottle-shaped containers thus moulded were measured under the pressurized state with the conditions of the same bottle-shaped containers only with the PET and with the mixture resin material as above, the amount of carbon dioxide gas in the bottle-shaped container was reduced by 23.3% in the case that the bottle-shaped container moulded only with the PET was allowed to stand for 60 days at 4°C being the temperature of the atmosphere. On the other hand, the amount of carbon dioxide gas in the bottle-shaped container was reduced only by 14.8% in the case that the bottle-shaped container moulded with the mixture resin material which contains 20% by weight of xylene group-containing polyamide resin to the PET in the case that the bottle-shaped container thus moulded was allowed to stand for 60 days at 4°C of the atmosphere.

From the above experiments, it became clear that the bottle-shaped container thus moulded with the above mixture resin material provided a high gas barrier property even to the carbon dioxide gas in the bottle-shaped container.

With respect to the reasons that the bottle-shaped container of the invention thus moulded exhibits a high gas barrier property as described above, a variety of factors can be considered as follows: From the fact that, when the mixture ratio of the xylene group-containing polyamide resin to the PET is excessively increased, it is considered that the wall structure of the bottle-shaped container thus moulded is progressively converted into a laminated foil structure so that an exfoliation between the laminated foils tends to occur, the xylene group-containing polyamide resin mixed with the PET acts to arrange the molecular array of the PET in laminar foils and to strengthen the bonding between the molecules of the PET forming the respective foils, thereby forming the wall structure of the bottle-shaped container in a laminar structure, with the result that the high gas barrier property can be performed.

As described above, the xylene group-containing polyamide resin serves to arrange the molecules of the PET in a laminar state and to strengthen the bonding between the molecules of the PET, but to also weaken the bonding strength between the molecules forming the respective foils and hence the molecules between the foils. Accordingly, when the mixture ratio of the xylene group-containing polyamide resin is excessively large, an exfoliation between the foils of the bottle-shaped container tends to occur, thereby reducing the mechanical strength of the bottle-shaped container, and since the respective layers of the bottle-shaped container are moulded along the orienting direction of the blow-molding, the mouldability of the bottle-shaped container is aggravated.

## Claims

1. A hollow blow-moulded bottle-shaped container comprising a layer of a biaxially oriented mixture resin material composed of (a) a polyethylene terephthalate resin and (b) a xylene group-containing polyamide resin which is present in an amount of 5 to 30% weight with respect to the polyethylene terephthalate resin, characterised in that the container is of single-layer one-piece construction so that it is made entirely of the biaxially oriented mixture resin material indicated above.

## Patentansprüche

1. Hohler blasgeformter, flaschenförmiger Behälter, der eine Schicht einer biaxial ausgerichteten Mischung eines Harzmaterials aus (a) einem Polyethylenterephthalatharz und (b) einem Xylolgruppen enthaltenden Polyamidharz, das in einer Menge von 5 bis 30 Gew.%, bezogen auf das Polyethylenterephthalatharz vorliegt, umfasst, dadurch **gekennzeichnet,** dass der Behälter aus einer Schicht in einem Stück aufgebaut ist, so dass er vollständig aus der oben angeführten biaxial ausgerichteten Mischung eines Harzmaterials besteht.

## Revendications

1. Récipient creux en forme de bouteille, moulé par soufflage, comportant une couche d'un mélange de résines à orientation biaxiale, composé (a) d'une résine du type téréphtalate de polyéthylène et (b) d'une résine du type polyamide contenant un groupe xylène qui est présente en quantité de 5 à 30 % en poids par rapport à la résine du type téréphtalate de polyéthylène, caractérisé en ce que le récipient est une construction d'une seule pièce à une seule couche de manière à être constitué entièrement du mélange de résine à orientation biaxiale indiqué ci-dessus.
